# EUROPÄISCHE PATENTSCHRIFT

(11) **EP 1 760 873 B1**
(45) Veröffentlichungstag und Bekanntmachung des Hinweises auf die Patenterteilung: **02.04.2008**
(21) Anmeldenummer: 05019335.8
(22) Anmeldetag: 06.09.2005
(51) Int. Cl.: H01L 41/04, H02N 2/06, F02D 41/20, F02M 51/06, F02M 59/46

(54) **Verfahren und Vorrichtung zum Betreiben eines Piezoaktors**
Method and apparatus for driving a piezoelectric actuator
Procédé et dispositif de commande d'un actionneur piézoélectrique

(43) Veröffentlichungstag der Anmeldung: 07.03.2007
(73) Patentinhaber: VDO Automotive AG, 93055 Regensburg (DE)
(72) Erfinder: Pirkl, Richard, 93055 Regensburg (DE); Reiländer, Udo, Dr., 87669 Rieden /a.F. (DE); Wiehoff, Hans-Jörg, 93049 Regensburg (DE)

(56) Entgegenhaltungen:
- DE-A1- 10 155 390
- DE-A1- 10 311 141
- DE-A1- 19 805 184
- DE-A1- 19 921 456
- DE-B3-4102004 006 55

## Beschreibung

Die Erfindung betrifft ein Verfahren und eine entsprechende Vorrichtung zum Betreiben eines Piezoaktors, insbesondere eines Piezoaktors in einem Einspritzventil einer Brennkraftmaschine eines Kraftfahrzeugs.

Piezoaktoren werden angesteuert durch Zuführen oder Entnehmen einer elektrischen Größe, z.B. einer elektrischen Spannung, eines elektrischen Stroms oder von elektrischer Energie oder elektrischer Ladung. Aufgrund von Toleranzen kann eine vorgegebene Ansteuerung verschiedener gleichartiger Piezoaktoren bei diesen zu einem unterschiedlich großen Hub führen. Dadurch sind beispielsweise Öffnungs- und Schließzeiten oder ein Öffnungsgrad von Ventilen unterschiedlich, die durch einen solchen Piezoaktor betätigt werden. Der Hub des Piezoaktors ist abhängig von einer mechanischen Last, die der Ausdehnung des Piezoaktors entgegen wirkt.

In der DE 199 21 456 A1 ist ein Verfahren und eine Vorrichtung zum Ansteuern eines Piezoaktors offenbart, mit dem bzw. mit der Überschwingen und Prellen eines mit dem Piezoaktor ausgestatteten Einspritzventils vermieden werden. Eine Schaltungsanordnung zum Ansteuern des piezoelektrischen Aktors ist ausgebildet zum Laden und Entladen des Piezoaktors in mehreren Zeitintervallen zum Öffnen bzw. Schließen des Einspritzventils. Der Piezoaktor wird so geladen bzw. entladen, dass dieser einen Teilhub mit einer maximalen Steigung ausführt und nach einer Pause einen weiteren Teilhub mit einer Steigung ausführt, die einen geringeren Betrag aufweist, so dass für ein durch den Piezoaktor betätigtes und diesen umfassendes mechanisches System des Einspritzventils ein aperiodischer Übergang zu einem Endwert angenähert wird.

Die Aufgabe der Erfindung ist, ein Verfahren und eine entsprechende Vorrichtung zum Betreiben eines Piezoaktors zu schaffen, das bzw. die einfach und präzise ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren und eine entsprechende Vorrichtung zum Betreiben eines Piezoaktors. Der Piezoaktor wird in einer ersten Betriebsart angesteuert durch getaktetes Zuführen einer ersten elektrischen Größe zum Laden oder Entladen des Piezoaktors unter Berücksichtigung mindestens eines Ansteuerparameters des Piezoaktors. Der Piezoaktor wird in einer zweiten Betriebsart angesteuert durch ungetaktetes Einprägen der ersten elektrischen Größe zum Laden oder Entladen des Piezoaktors, und zwar mit einem vorgegebenen Verlauf der ersten elektrischen Größe, der im Wesentlichen unabhängig ist von einer Laständerung an dem Piezoaktor. Ein Verlauf einer zweiten elektrischen Größe des Piezoaktors wird erfasst während mindestens einer Messzeitdauer während des Einprägens des vorgegebenen Verlaufs der ersten elektrischen Größe. Der mindestens eine Ansteuerparameter des Piezoaktors wird ermittelt abhängig von dem erfassten Verlauf der zweiten elektrischen Größe.

Der Vorteil ist, dass der Piezoaktor durch das ungetaktete Ansteuern in der zweiten Betriebsart deutlich weniger zum Schwingen angeregt wird als durch das getaktete Ansteuern in der ersten Betriebsart. Der Verlauf der zweiten elektrischen Größe kann so in der zweiten Betriebsart sehr präzise und weitgehend ohne Störungen erfasst werden, durch die die zweite elektrische Größe durch das Schwingen des Piezoaktors in der ersten Betriebsart überlagert ist. Der mindestens eine Ansteuerparameter kann so einfach und präzise ermittelt werden und das Ansteuern des Piezoaktors kann dadurch in der ersten Betriebsart besonders präzise erfolgen.

In einer vorteilhaften Ausgestaltung der Erfindung weist die erste elektrische Größe in der zweiten Betriebsart während des Ladens bzw. Entladens des Piezoaktors einen jeweils im Wesentlichen konstanten Wert auf oder der vorgegebene Verlauf der ersten elektrischen Größe ist rampenförmig oder weist die Form jeweils einer Sinushalbwelle auf. Dies hat den Vorteil, das dies besonders einfach realisierbar ist.

In einer weiteren vorteilhaften Ausgestaltung der Erfindung umfasst die mindestens eine Messzeitdauer zeitlich mindestens eine Laständerung an dem Piezoaktor. Der mindestens eine Ansteuerparameter wird bezogen auf die mindestens eine Laständerung ermittelt. Dies hat den Vorteil, dass die mindestens eine Laständerung durch das ungetaktete Ansteuern des Piezoaktors in der zweiten Betriebsart besonders einfach ermittelt werden kann.

In einer weiteren vorteilhaften Ausgestaltung der Erfindung ist der Piezoaktor so in einem Ventil angeordnet, dass das Ventil abhängig von der Ansteuerung des Piezoaktors in der ersten Betriebsart öffnet und schließt und das Ventil in der zweiten Betriebsart geschlossen ist und eine Zeitdauer des Einprägens oder ein maximaler Betrag der ersten elektrischen Größe so vorgegeben ist, dass das Ventil geschlossen bleibt. Der Vorteil ist, dass Störungen in einem System durch das Öffnen des Ventils vermieden werden, in dem das Ventil angeordnet ist.

In einer vorteilhaften Ausgestaltung der Erfindung umfasst die Vorrichtung für das Einprägen des vorgegebenen Verlaufs der ersten elektrischen Größe in der zweiten Betriebsart eine Messquelle, die zusätzlich zu einer für das Ansteuern des Piezoaktors in der ersten Betriebsart vorgesehenen Energiequelle vorgesehen ist. Die Energiequelle ist beispielsweise ausgebildet, dem Piezoaktor 1 einen vorgegebenen Strom, eine vorgegebene Spannung, eine vorgegebene Ladungsmenge oder eine vorgegebene Energiemenge zuzuführen. Die Messquelle ist entweder als eine Spannungsquelle oder als eine Stromquelle ausgebildet. Der Vorteil ist, dass die Messquelle so ausgebildet sein kann, dass die erste elektrische Größe, z.B. eine elektrische Spannung bzw. ein elektrischer Strom, dem Piezoaktor besonders präzise zugeführt werden kann.

Ausführungsbeispiele der Erfindung sind im Folgenden anhand der schematischen Zeichnungen erläutert. Es zeigen:
Figur 1 ein Ventil und eine Steuereinheit,
Figur 2 eine Prinzipdarstellung des Ventils,
Figur 3 ein Blockschaltbild der Steuereinheit,
Figur 4 eine Ausführungsform einer Messquelle,
Figur 5A ein Stromverlauf der Messquelle,
Figur 5B ein Spannungsverlauf eines Piezoaktors und
Figur 6 ein Ablaufdiagramm.

Elemente gleicher Konstruktion oder Funktion sind figuren-übergreifend mit den gleichen Bezugszeichen versehen.

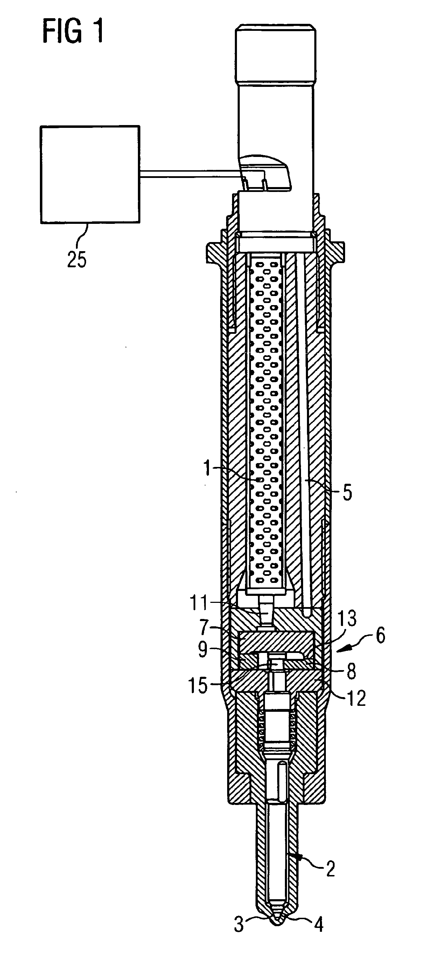

Ein Ventil, z.B. ein Einspritzventil für eine Brennkraftmaschine eines Kraftfahrzeugs, insbesondere ein Common-Rail Diesel-Einspritzventil, umfasst einen Piezoaktor 1 und einen Schließkörper 2 (Figur 1). Der Schließkörper 2 sitzt in einer Schließposition des Ventils auf einem Ventilsitz 3 auf und verschließt dadurch eine Einspritzöffnung 4 des Ventils. Die Einspritzöffnung 4 wird freigegeben durch Abheben des Schließkörpers 2 von dem Ventilsitz 3. Ein Kraftstoffzulauf 5 ist vorgesehen, um Kraftstoff, z.B. Dieselkraftstoff, hin zu der Einspritzöffnung 4 zu leiten. Das Ventil umfasst ferner eine Hebelvorrichtung 6, die mechanisch zwischen dem Piezoaktor 1 und dem Schließkörper 2 angeordnet und mit diesen gekoppelt ist. Der Schließkörper 2 umfasst eine Ventilnadel, die mit dem Ventilsitz 3 zusammenwirkt, und einen Ventilkolben 15, der mit der Hebelvorrichtung 6 zusammenwirkt.

Die Hebelvorrichtung 6 ist so ausgebildet, dass die Richtung des Hubs des Schließkörpers 2 entgegensetzt zu der Richtung des Hubs des Piezoaktors 1 verläuft. Dadurch kann bei der gezeigten Anordnung des Piezoaktors 1 das Ventil durch Abheben des Schließkörpers 2 von dem Ventilsitz 3 nach innen geöffnet werden, wenn der Piezoaktor 1 so angesteuert wird, dass dieser sich verlängert. Das Ventil wird geschlossen, indem der Piezoaktor 1 so angesteuert wird, dass dieser sich verkürzt.

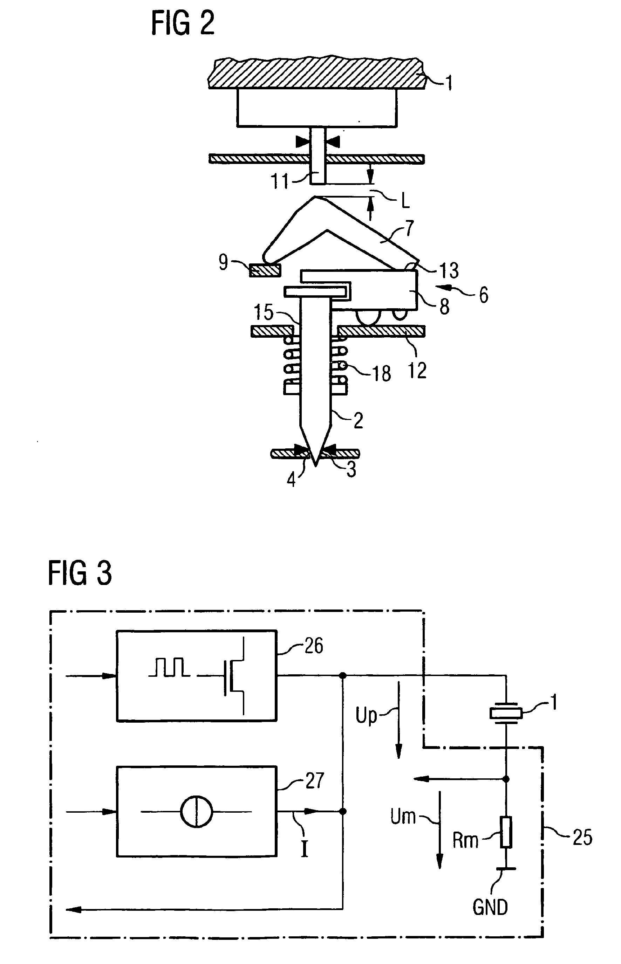

Figur 2 zeigt eine Prinzipdarstellung des Ventils und insbesondere der Hebelvorrichtung 6. Der Piezoaktor 1 ist über einen Stift 11 mit der Hebelvorrichtung 6 koppelbar. Die Hebelvorrichtung 6 umfasst ein erstes Hebelelement 7 und ein zweites Hebelelement 8. Das erste Hebelelement'7 ist auf einem ersten Widerlagerkörper 9 ortsfest gelagert. Der Stift 11 wirkt auf das erste Hebelelement 7 ein, wenn der Piezoaktor 1 sich so weit ausgedehnt hat, dass dieser einen Leerhub L überwunden hat. Das zweite Hebelelement 8 ist auf einem zweiten Widerlagerkörper 12 gelagert. Ferner ist das erste Hebelelement 7 über ein Lager 13 an dem zweiten Hebelelement 8 gelagert. Dadurch sind das erste Hebelelement 7 und das zweite Hebelelement 8 unmittelbar mechanisch miteinander gekoppelt.

Das zweite Hebelelement 8 ist so ausgebildet, dass sich das zweite Hebelelement 8 und der zweite Widerlagerkörper 12 abhängig von dem Hub des Piezoaktors 1 an unterschiedlichen Orten berühren. Dadurch ist der Hebelarm des zweiten Hebelelements 8 variabel. Durch entsprechendes Ausbilden des Hebelelements 8 weist die Hebelvorrichtung 6 abhängig von dem Hub des Piezoaktors 1 mindestens zwei voneinander unterschiedliche Übersetzungsverhältnisse auf.

Das Ventil weist eine Ventilfeder 18 auf, die den Schließkörper 2 in ihre Schließposition drückt. Dadurch ist sichergestellt, dass das Ventil geschlossen ist, wenn das Ventil nicht in Betrieb ist. Zusätzlich zu der Federkraft der Ventilfeder 18 wirkt auf den Schließkörper 2 der Kraftstoffdruck des über den Kraftstoffzulauf 5 zugeführten Kraftstoffs. Der Kraftstoffdruck kann z.B. größer als 2000 bar sein. Dadurch muss eine sehr hohe Kraft aufgebracht werden, um den Schließkörper 2 von dem Ventilsitz 3 abzuheben. Ferner muss der Schließkörper 2 für das Einspritzen des Kraftstoffs so weit von dem Ventilsitz 3 abgehoben werden, dass eine vorgegebene Kraftstoffmenge in einer vorgegebenen Zeitdauer eingespritzt werden kann.

Zum Abheben des Schließkörpers 2 von dem Ventilsitz 3 ist eine besonders hohe Kraft erforderlich. Daher ist es vorteilhaft, die Hebelvorrichtung 6 so auszubilden, dass das Übersetzungsverhältnis des Hubs des Piezoaktors 1 zu dem Hub des Schließkörpers 2 in einer ersten Phase des Öffnungsvorgangs des Ventils z.B. etwa 1:1 beträgt. Nach dem Abheben des Schließkörpers 2 von dem Ventilsitz 3 und dem Freigeben der Einspritzöffnung 4 kann ein Druckausgleich stattfinden, so dass der Schließkörper 2 im Wesentlichen nur noch gegen die Federkraft der Ventilfeder 18 weiter bewegt werden muss. Um einen möglichst großen Hub des Schließkörpers 2 zu erhalten, ist das Übersetzungsverhältnis in dieser zweiten Phase des Öffnungsvorgangs des Ventils kleiner, z.B. etwa 1:10.

Das Ventil weist eine Hubbegrenzung für den Schließkörper 2 auf. Die Hubbegrenzung ist durch das erste Hebelelement 7 gebildet, das in der Bewegungsachse des Schließkörpers 2 angeordnet ist (Figur 1). Das Ventil weist also seinen maximalen Öffnungszustand auf, wenn der Schließkörper 2 bzw. der Ventilkolben 15 auf das erste Hebelelement 7 auftrifft.

Während des Öffnungsvorgangs des Ventils und ebenso während des Schließvorgangs des Ventils unterliegt die auf den Piezoaktor 1 wirkende Last Änderungen. Eine solche Laständerung wird beispielsweise verursacht durch das Auftreffen des Stifts 11 auf das erste Hebelelement 7, wenn also gerade der Leerhub L überwunden ist. Ferner wird eine solche Laständerung verursacht durch das Abheben des Schließkörpers 2 von dem Ventilsitz 3 oder das Aufsetzen des Schließkörpers 2 auf den Ventilsitz 3. Ein weiteres Beispiel ist das Auftreffen des Schließkörpers 2 auf das erste Hebelelement 7 bei Erreichen des maximalen Öffnungszustands des Ventils. Über das erste Hebelelement 7 und den Stift 11 bewirkt dies die Laständerung an dem Piezoaktor 1. Durch die Laständerung an dem Piezoaktor 1 wird in elektrischen Größen des Piezoaktors 1 ein Signal erzeugt, z.B. in einer elektrischen Spannung Up des Piezoaktors 1. Dieses Signal kann beispielsweise durch eine Steuereinheit 25 erfasst und ausgewertet werden, die mit dem Piezoaktor 1 elektrisch gekoppelt ist. Abhängig von dem Signal, z.B. von einem Zeitpunkt des Auftretens des Signals, kann so mindestens ein Ansteuerparameter P für das Ansteuern des Piezoaktors 1 angepasst werden, um die gewünschte Kraftstoffmenge möglichst präzise zumessen zu können. Der mindesten eine Ansteuerparameter P ist z.B. ein Wert eines elektrischen Stroms oder einer elektrischen Spannung, einer elektrischen Ladungs- oder Energiemenge oder einer Zeitdauer für das Laden oder Entladen bis zu einer vorgegebenen Laständerung.

Figur 3 zeigt ein Blockschaltbild der Steuereinheit 25. Die Steuereinheit 25 kann auch als eine Vorrichtung zum Betreiben des Piezoaktors 1 bezeichnet werden. Die Steuereinheit 25 umfasst eine Leistungsendstufe 26, die als eine Energiequelle zum getakteten Laden und Entladen des Piezoaktors 1 ausgebildet ist. Die Energiequelle bzw. die Leistungsendstufe 26 führt dem Piezoaktor 1 eine erste elektrische Größe getaktet zu. Beispielsweise führt die Energiequelle bzw. die Leistungsendstufe 26 dem Piezoaktor 1 einen vorgegebenen Strom, eine vorgegebene Spannung, eine vorgegebene Ladungsmenge oder eine vorgegebene Energiemenge zu. Die jeweils nicht vorgegebenen elektrischen Größen ergeben sich abhängig z.B. von einem Ladungszustand des Piezoaktors 1, dem Hub des Piezoaktors 1 und der Last, die auf den Piezoaktor 1 einwirkt.

Die Leistungsendstufe 26 ist elektrisch mit dem Piezoaktor 1 gekoppelt, der über einen Messwiderstand Rm mit einem Bezugspotenzial GND elektrisch gekoppelt ist. Über dem Messwiderstand Rm fällt bei einem Stromfluss durch den Messwiderstand Rm eine Messspannung Um ab, die repräsentativ ist für den Stromfluss durch den Piezoaktor 1. Über dem Piezoaktor 1 fällt die elektrische Spannung Up des Piezoaktors 1 ab.

Die Steuereinheit 25 umfasst ferner eine Messquelle 27, die ausgebildet ist, dem Piezoaktor 1 einen Verlauf der ersten elektrischen Größe, insbesondere einen elektrischen Strom I oder die elektrische Spannung Up des Piezoaktors 1, ungetaktet einzuprägen. Durch das ungetaktete Einprägen der ersten elektrischen Größe wird der Piezoaktor 1 weniger zu mechanischen Schwingungen angeregt als durch das getaktete Ansteuern durch die Leistungsendstufe 26. Der Verlauf der ersten elektrischen Größe ist durch die Messquelle 27 so vorgegeben, dass dieser im Wesentlichen unabhängig von der Laständerung an dem Piezoaktor 1 ist.

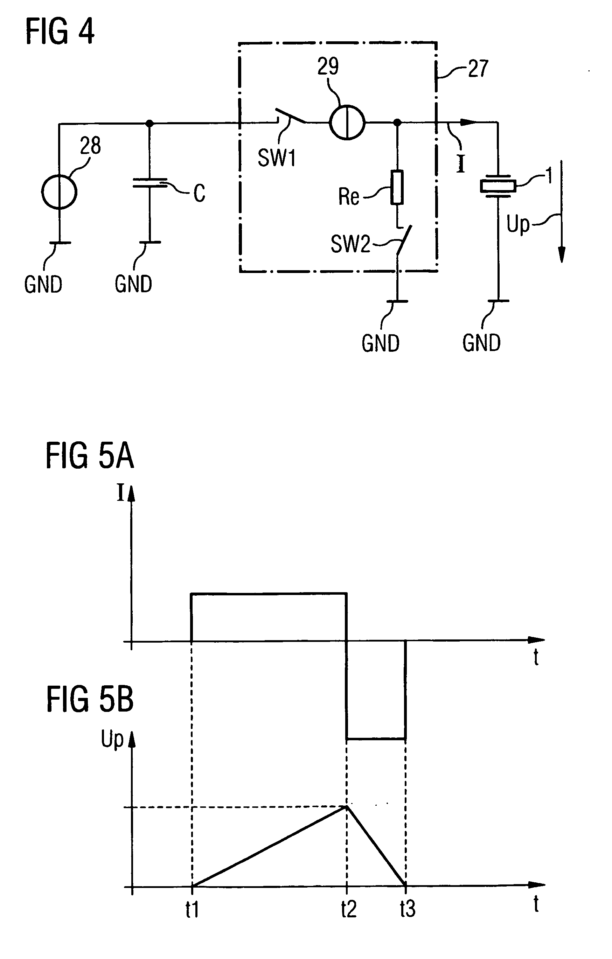

Figur 4 zeigt eine besonders einfache Ausführungsform der Messquelle 27. Die Messquelle 27 umfasst einen ersten Schalter SW1 und einen zweiten Schalter SW2. Die Messquelle 27 umfasst ferner eine Stromquelle 29 und einen Entladewiderstand Re. Die Messquelle 27 ist eingangsseitig mit einer Spannungsquelle 28 gekoppelt. Eine elektrische Spannung der Spannungsquelle 28 beträgt beispielsweise etwa 200 Volt und wird über einen elektrisch parallel zu der Spannungsquelle 28 angeordneten Kondensator C gestützt. Der Kondensator C ist vorzugsweise so dimensioniert, dass die darin gespeicherte elektrische Ladung für mindestens einen Ansteuerzyklus des Piezoaktors 1 ausreicht. Der erste Schalter SW1 und die Stromquelle 29 sind elektrisch in Reihe und zwischen der Spannungsquelle 28 und dem Piezoaktor 1 angeordnet. Der Entladewiderstand Re und der zweite Schalter SW2 bilden eine Reihenschaltung, die elektrisch parallel zu dem Piezoaktor 1 angeordnet ist.

Zum Laden des Piezoaktors 1 wird der erste Schalter SW1 geschlossen. Der zweite Schalter SW2 ist geöffnet. Dem Piezoaktor 1 wird dann der durch die Stromquelle 29 vorgegebene elektrische Strom I eingeprägt. Die elektrische Spannung Up des Piezoaktors 1 ist abhängig von dem Ladezustand des Piezoaktors 1, seiner Ausdehnung und der Last, die auf den Piezoaktor 1 einwirkt. Zum Entladen wird der zweite Schalter SW2 geschlossen. Der erste Schalter SW1 ist geöffnet. Der Piezoaktor 1 entlädt sich über den Entladewiderstand Re.

Die Messquelle 27 kann auch so ausgebildet sein, dass der Piezoaktor 1 mit dem durch die Stromquelle 29 oder durch eine weitere Stromquelle eingeprägten elektrischen Strom I entladen wird. Ferner kann die Messquelle 27 alternativ auch als Spannungsquelle so ausgebildet sein, dass die elektrische Spannung Up des Piezoaktors 1 zum Laden und/oder Entladen des Piezoaktors 1 diesem eingeprägt wird und der elektrische Strom durch den Piezoaktor 1 abhängig ist von dem Ladezustand des Piezoaktors 1, seiner Ausdehnung und der Last, die auf den Piezoaktor 1 einwirkt.

Bevorzugt ist die Messquelle 27 als eine präzise Gleichstromquelle oder Gleichspannungsquelle ausgebildet. Jedoch kann ebenso ein anderer, kontinuierlicher Stromverlauf bzw. Spannungsverlauf vorgegeben sein. Der Stromverlauf bzw. der Spannungsverlauf ist beispielsweise rampenförmig oder besteht für das Laden und das Entladen des Piezoaktors 1 jeweils aus einer sinusförmigen Halbwelle unterschiedlicher Polarität.

Figur 5A zeigt den Verlauf des elektrischen Stroms I der Messquelle 27, die als Gleichstromquelle ausgebildet ist. Das Einprägen des vorgegebenen elektrischen Stroms I zum Laden des Piezoaktors 1 beginnt zu einem ersten Zeitpunkt t1 und endet zu einem zweiten Zeitpunkt t2. Figur 5B zeigt den zugehörigen Verlauf der elektrischen Spannung Up des Piezoaktors 1. Die elektrische Spannung Up des Piezoaktors 1 steigt zwischen dem ersten Zeitpunkt t1 und dem zweiten Zeitpunkt t2 kontinuierlich an. Das Entladen des Piezoaktors 1 beginnt zu dem zweiten Zeitpunkt t2 und endet zu einem dritten Zeitpunkt t3. Die elektrische Spannung Up des Piezoaktors 1 sinkt kontinuierlich zwischen dem zweiten Zeitpunkt t2 und dem dritten Zeitpunkt t3. Dementsprechend verringert sich der Hub des Piezoaktors 1. Der zum Laden des Piezoaktors 1 eingeprägte vorgegebene elektrische Strom I weist ein positives Vorzeichen auf, der zum Entladen des Piezoaktors 1 eingeprägte vorgegebene elektrische Strom I weist ein negatives Vorzeichen auf.

Abhängig von der Ausgestaltung des Ventils kann die zum Laden des Piezoaktors 1 eingeprägte erste elektrische Größe ein positives oder ein negatives Vorzeichen aufweisen. Entsprechend kann die zum Entladen des Piezoaktors 1 eingeprägte erste elektrische Größe ein positives oder ein negatives Vorzeichen aufweisen.

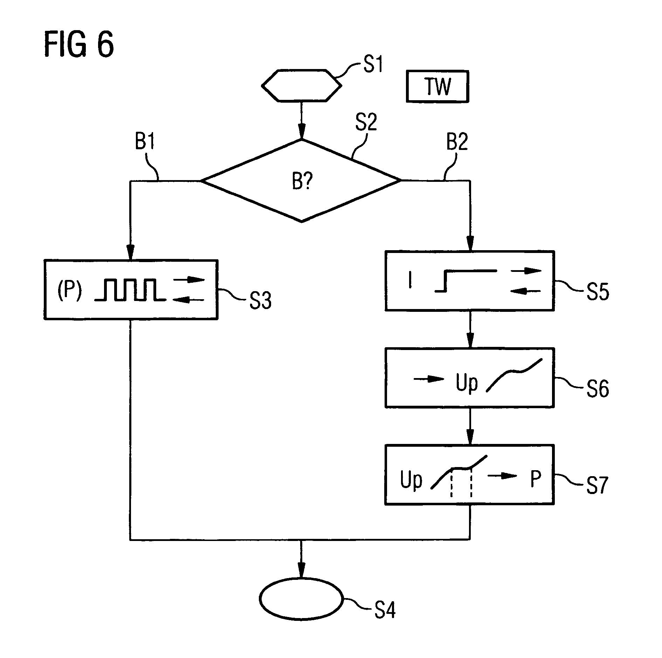

Figur 6 zeigt ein Ablaufdiagramm eines Verfahrens zum Betreiben des Piezoaktors 1. Das Verfahren beginnt in einem Schritt S1. In einem Schritt S2 wird ermittelt, in welcher Betriebsart B der Piezoaktor 1 betrieben werden soll. Soll der Piezoaktor 1 in einer ersten Betriebsart B1 betrieben werden, dann wird das Verfahren in einem Schritt S3 fortgeführt. In dem Schritt S3 wird der Piezoaktor 1 unter Berücksichtigung des mindestens einen Ansteuerparameters P getaktet angesteuert zum Laden oder Entladen des Piezoaktors 1, z.B. durch die Leistungsendstufe 26. Das Verfahren wird in einem Schritt S4 beendet und nach einer Wartezeitdauer TW in dem Schritt S1 fortgesetzt. Die Wartezeitdauer TW ist beispielsweise die Zeitdauer zwischen zwei Öffnungs- oder Einspritzvorgängen des Ventils.

Soll der Piezoaktor 1 in dem Schritt S2 jedoch in einer zweiten Betriebsart B2 betrieben werden, dann wird das Verfahren in einem Schritt S5 fortgeführt. Vorzugsweise wird der Piezoaktor 1 zwischen zwei Einspritzvorgängen in der zweiten Betriebsart B2 betrieben. In dem Schritt S5 wird dem Piezoaktor 1 die erste elektrische Größe, in diesem Beispiel der vorgegebene elektrische Strom I, ungetaktet eingeprägt zum Laden oder Entladen des Piezoaktors 1. In einem Schritt S6 wird während einer Messzeitdauer während des Einprägens der ersten elektrischen Größe der Verlauf der zweiten elektrischen Größe erfasst, in diesem Beispiel die elektrische Spannung Up des Piezoaktors 1. In einem Schritt S7 wird abhängig von dem erfassten Verlauf der elektrischen Spannung Up des Piezoaktors 1 der mindestens eine Ansteuerparameter P des Piezoaktors 1 ermittelt. Das Verfahren wird in dem Schritt S4 beendet und nach der Wartezeitdauer TW in dem Schritt S1 fortgeführt.

Ist in der zweiten Betriebsart B2 als die erste elektrische Größe die elektrische Spannung Up des Piezoaktors 1 vorgegeben, dann wird als Verlauf der zweiten elektrischen Größe entsprechend der Verlauf des elektrischen Stroms durch den Piezoaktor 1 erfasst, z.B. mittels der Messspannung Um. Entsprechend wird der mindestens eine Ansteuerparameter P abhängig von dem Verlauf des elektrischen Stroms durch den Piezoaktor 1 ermittelt.

Die erste und die zweite Betriebsart B1, B2 des Piezoaktors 1 werden beispielsweise abwechselnd ausgeführt. Bevorzugt wird die zweite Betriebsart B2 seltener ausgeführt als die erste Betriebsart B1, z.B. nur jedes zehnte Mal. Dadurch sind die Anforderungen an einen hohen energetischen Wirkungsgrad der Messquelle 27 gering. Bevorzugt ist das Ventil während der zweiten Betriebsart B2 geschlossen. Die Messquelle 27 ist bevorzugt so ausgebildet, dass eine Zeitdauer des Einprägens der ersten elektrischen Größe oder ein maximaler Betrag der ersten elektrischen Größe so vorgegeben ist, dass das Ventil während der zweiten Betriebsart B2 geschlossen bleibt. Dadurch wird das System, in dem das Ventil angeordnet ist, z.B. die Brennkraftmaschine, nicht beeinträchtigt, wenn der Piezoaktor 1 zum Ermitteln des mindestens einen Ansteuerparameters P in der zweiten Betriebsart B2 betrieben wird. Der mindestens eine Ansteuerparameter P ist dann bevorzugt auf die Überwindung des Leerhubs L bezogen. Jedoch kann das Ventil zum Ermitteln des mindestens einen Ansteuerparameters P z.B. während eines Startvorgangs der Brennkraftmaschine oder während eines Schubbetriebs der Brennkraftmaschine auch geöffnet werden, ohne dass dies den Betrieb der Brennkraftmaschine beeinträchtigt. Dann können auch auf das Öffnen oder Schließen des Ventils oder auf weitere Laständerungen bezogene Ansteuerparameter P ermittelt werden.

Vorzugsweise umfasst die Messzeitdauer zeitlich mindestens eine Laständerung an dem Piezoaktor 1, z.B. das Überwinden des Leerhubs L, das Abheben des Schließkörpers 2 von dem Ventilsitz 3, das Aufsetzen des Schließkörpers 2 auf den Ventilsitz 3, das Auftreffen des Schließkörpers 2 bzw. des Ventilkolbens 15 auf die Hubbegrenzung bzw. das erste Hebelelement 7 oder der Wechsel des Übersetzungsverhältnisses. Der mindestens eine Ansteuerparameter P wird bevorzugt bezogen auf die mindestens eine Laständerung ermittelt.

Alternativ oder zusätzlich kann der mindestens eine Ansteuerparameter P auch durch Vergleich des Verlaufs der zweiten elektrischen Größe mit einem Referenzverlauf eines Referenzaktors ermittelt werden, für den entsprechende Ansteuerparameter als Referenzparameter bekannt sind. So wird beispielsweise der mindestens eine Ansteuerparameter P korrigiert gegenüber dem entsprechenden Referenzparameter abhängig von der Abweichung des Verlaufs der zweiten elektrischen Größe von dem Referenzverlauf.

Durch die direkte Kopplung des Piezoaktors 1 mit dem Schließkörper 2 über die mechanische Hebelvorrichtung 6 sind die Laständerungen an dem Piezoaktor 1 besonders deutlich in den elektrischen Größen des Piezoaktors 1 ausgeprägt und sind so besonders zuverlässig aus dem Verlauf der zweiten elektrischen Größe ermittelbar. Jedoch können das Verfahren und die entsprechende Vorrichtung zum Betreiben des Piezoaktors 1 ebenso für anders ausgebildete Ventile mit Piezoaktorantrieb genutzt werden, z.B. für Einspritzventile, bei denen der Piezoaktor 1 ein hydraulisches Steuerventil betätigt, wie z.B. in einem Pumpe-Düse-Einspritzventil.

## Patentansprüche

1. Verfahren zum Betreiben eines Piezoaktors (1), bei dem
- der Piezoaktor (1) in einer ersten Betriebsart (B1) angesteuert wird durch getaktetes Zuführen einer ersten elektrischen Größe zum Laden oder Entladen des Piezoaktors (1) unter Berücksichtigung mindestens eines Ansteuerparameters (P) des Piezoaktors (1),
- der Piezoaktor (1) in einer zweiten Betriebsart (B2) angesteuert wird durch ungetaktetes Einprägen der ersten elektrische Größe zum Laden oder Entladen des Piezoaktors (1), und zwar mit einem vorgegebenen Verlauf der ersten elektrischen Größe, der im Wesentlichen unabhängig ist von einer Laständerung an dem Piezoaktor (1),
- ein Verlauf einer zweiten elektrischen Größe des Piezoaktors erfasst wird während mindestens einer Messzeitdauer während des Einprägens des vorgegebenen Verlaufs der ersten elektrischen Größe und
- abhängig von dem erfassten Verlauf der zweiten elektrischen Größe der mindestens eine Ansteuerparameter (P) des Piezoaktors (1) ermittelt wird.

2. Verfahren nach Anspruch 1, bei dem die erste elektrische Größe in der zweiten Betriebsart (B2) während des Ladens bzw. Entladens des Piezoaktors (1) einen jeweils im Wesentlichen konstanten Wert aufweist oder der vorgegebene Verlauf der ersten elektrischen Größe rampenförmig ist oder die Form jeweils einer Sinushalbwelle aufweist.

3. Verfahren nach einem der vorstehenden Ansprüche, bei dem die mindestens eine Messzeitdauer zeitlich mindestens eine Laständerung an dem Piezoaktor (1) umfasst und der mindestens eine Ansteuerparameter (P) bezogen auf die mindestens eine Laständerung ermittelt wird.

4. Verfahren nach einem der vorstehenden Ansprüche, bei dem der Piezoaktor (1) so in einem Ventil angeordnet ist, dass das Ventil abhängig von der Ansteuerung des Piezoaktors (1) in der ersten Betriebsart (B1) öffnet und schließt, und das Ventil in der zweiten Betriebsart (B2) geschlossen ist und eine Zeitdauer des Einprägens oder ein maximaler Betrag der ersten elektrischen Größe so vorgegeben ist, dass das Ventil geschlossen bleibt.

5. Vorrichtung zum Betreiben eines Piezoaktors (1), die ausgebildet ist
- zum Ansteuern des Piezoaktors (1) in einer ersten Betriebsart (B1) durch getaktetes Zuführen einer ersten elektrischen Größe zum Laden oder Entladen des Piezoaktors (1) unter Berücksichtigung mindestens eines Ansteuerparameters (P) des Piezoaktors,
- zum Ansteuern des Piezoaktors (1) in einer zweiten Betriebsart (B2) durch ungetaktetes Einprägen der ersten elektrische Größe zum Laden oder Entladen des Piezoaktors (1), und zwar mit einem vorgegebenen Verlauf der ersten elektrischen Größe, der im Wesentlichen unabhängig ist von einer Laständerung an dem Piezoaktor (1),
- zum Erfassen eines Verlaufs einer zweiten elektrischen Größe des Piezoaktors (1) während mindestens einer Messzeitdauer während des Einprägens des vorgegebenen Verlaufs der ersten elektrischen Größe und
- zum Ermitteln des mindestens einen Ansteuerparameters (P) des Piezoaktors (1) abhängig von dem erfassten Verlauf der zweiten elektrischen Größe.

6. Vorrichtung nach Anspruch 5, die für das Einprägen des vorgegebenen Verlaufs der ersten elektrischen Größe in der zweiten Betriebsart (B2) eine Messquelle (27) umfasst, die zusätzlich zu einer für das Ansteuern des Piezoaktors (1) in der ersten Betriebsart vorgesehenen Energiequelle vorgesehen ist.

## Claims

1. Method for driving a piezoelectric actuator (1), in which
- the piezoelectric actuator (1) is activated in a first operating mode (B1) by clocked supply of a first electrical variable for charging or discharging the piezoelectric actuator (1), taking into account at least one activation parameter (P) of the piezoelectric actuator
- the piezoelectric actuator (1) is activated in a second operating mode (B2) by unclocked injection of the first electrical variable to charge or discharge the piezoelectric actuator (1), and this is done with a predetermined characteristic of the first electrical variable which is essentially independent of change in load at the piezoelectric actuator
- a characteristic of a second electrical variable of the piezoelectric actuator is detected during at least one measurement period during the injection of the predetermined characteristic of the first electrical variable and
- dat least one activation parameter (P) of the piezoelectric actuator (1) is determined as a function of the characteristic of the second electrical variable detected.

2. Method according to claim 1, in which the first electrical variable in the second operating mode (B2) during the charging or discharging of the piezoelectric actuator (1) has an essentially constant value in each case or the predetermined characteristic of first electrical variable is ramp-shaped or is in the form of a half sine wave in each case.

3. Method according to one of the previous claims, in which the at least one measurement duration includes at least one change in load at the piezoelectric actuator (1) over time and the at least one activation parameter (P) is determined in relation to the at least one change in load.

4. Method according to one of the previous claims, in which the piezoelectric actuator (1) is arranged in a valve such that the valve opens and closes as a function of the activation of the piezoelectric actuator (1) in the first operating mode (B1) and the valve is closed in the second operating mode (B2) and a period of the injection or a maximum amount of the first electrical variable is predetermined such that the valve remains closed.

5. Device for driving a piezoelectric actuator (1), which is embodied
- for activating the piezoelectric actuator (1) in a first operating mode (B1) by clocked supply of a first electrical variable for charging or discharging the piezoelectric actuator (1) taking into account at least one activation parameter (P) of the piezoelectric actuator,
- for activating the piezoelectric actuator (1) in a second operating mode (B2) by unclocked injection of the first electrical variable for charging or discharging the piezoelectric actuator, and with this being done with a predetermined characteristic of the first electrical variable which is essentially independent of a change in load at the piezoelectric actuator (1),
- to detect a characteristic of a second electrical variable of the piezoelectric actuator (1) during at least one measurement period during of the injection of the predetermined characteristic of the first electrical variable and
- for determining the at least one activation parameter (P) of the piezoelectric actuator (1) as a function of the detected characteristic of the second electrical variable.

6. Device according to claim 5 which, for the injection of the predetermined characteristic of the first electrical variable in the second operating mode (B2), includes a measurement source (27) which is provided in addition to a source of energy provided for the activation of the piezoelectric actuator (1) in the first operating mode.

## Revendications

1. Procédé permettant de faire fonctionner un actionneur piézoélectrique (1), dans lequel
- l'actionneur piézoélectrique (1) est activé, dans un premier mode de fonctionnement (B1), par l'apport périodique d'une première grandeur électrique en vue de la charge ou de la décharge de l'actionneur piézoélectrique (1) en tenant compte au moins d'un paramètre d'activation (P) de l'actionneur piézoélectrique (1),
- l'actionneur piézoélectrique (1) est activé, dans un deuxième mode de fonctionnement (B2), par l'application apériodique de la première valeur électrique en vue de la charge ou de la décharge de l'actionneur piézoélectrique (1), et ce avec une allure de la première grandeur électrique préalablement définie qui est essentiellement indépendante d'un changement de charge au niveau de l'actionneur piézoélectrique (1),
- une allure d'une deuxième grandeur électrique de l'actionneur piézoélectrique est saisie pendant au moins une durée de mesure prévue pendant l'application de l'allure préalablement définie de la première grandeur électrique et
- le paramètre d'activation (P) - au moins au nombre de un - de l'actionneur piézoélectrique (1) est déterminé en fonction de l'allure saisie de la deuxième grandeur électrique.

2. Procédé selon la revendication 1 dans lequel, dans le deuxième mode de fonctionnement (B2), la première grandeur électrique présente, pendant la charge et la décharge de l'actionneur piézoélectrique (1) respectivement une valeur essentiellement constante, ou l'allure préalablement définie de la première grandeur électrique est en forme de rampe ou présente respectivement la forme d'une demi-sinusoïde.

3. Procédé selon l'une des revendications précédentes dans lequel la durée de mesure - au moins au nombre de une
- comprend, dans le temps, au moins un changement de charge au niveau de l'actionneur piézoélectrique (1) et le paramètre d'activation (P) - au moins au nombre de un - est déterminé par rapport au changement de charge - au moins au nombre de un.

4. Procédé selon l'une des revendications précédentes dans lequel l'actionneur piézoélectrique (1) est disposé dans une soupape de telle sorte que, dans le premier mode de fonctionnement (B1), ladite soupape s'ouvre et se ferme en fonction de l'activation de l'actionneur piézoélectrique (1) et que, dans le deuxième mode de fonctionnement (B2), la soupape est à l'état fermé, et qu'une durée d'application ou qu'une valeur maximale de la première grandeur électrique est préalablement définie de telle sorte que la soupape reste fermée.

5. Dispositif permettant de faire fonctionner un actionneur piézoélectrique (1), lequel est conçu pour
- activer l'actionneur piézoélectrique (1) dans un premier mode de fonctionnement (B1) par l'apport périodique d'une première grandeur électrique en vue de la charge ou de la décharge de l'actionneur piézoélectrique (1) en tenant compte au moins d'un paramètre d'activation (P) de l'actionneur piézoélectrique (1),
- activer l'actionneur piézoélectrique (1) dans un deuxième mode de fonctionnement (B2) par l'application apériodique de la première valeur électrique en vue de la charge ou de la décharge de l'actionneur piézoélectrique (1), et ce avec une allure préalablement définie de la première grandeur électrique, laquelle est essentiellement indépendante d'un changement de charge au niveau de l'actionneur piézoélectrique (1),
- saisir une allure d'une deuxième grandeur électrique de l'actionneur piézoélectrique (1) pendant au moins une durée de mesure prévue pendant l'application de l'allure préalablement définie de la première grandeur électrique et
- déterminer le paramètre d'activation (P) - au moins au nombre de un - de l'actionneur piézoélectrique (1) en fonction de l'allure saisie de la deuxième grandeur électrique.

6. Dispositif selon la revendication 5 qui, en vue de l'application de l'allure préalablement définie de la première grandeur électrique, comprend dans le deuxième mode de fonctionnement (B2) une source de mesure (27), laquelle est prévue en plus d'une source d'énergie prévue pour l'activation de l'actionneur piézoélectrique (1) dans le premier mode de fonctionnement.
